# EUROPEAN PATENT SPECIFICATION

(11) **EP 1 398 493 B1**
(45) Date of publication and mention of the grant of the patent: **22.11.2006**
(21) Application number: 03255630.0
(22) Date of filing: 09.09.2003
(51) Int. Cl.: F02K 1/15, F02K 1/76

(54) **Thrust reverser for a jet engine and hydraulic actuator**
Schubumkehrer für einen Strahlantrieb und hydraulische Stellvorrichtung
Inverseur de poussée et actionneur hydraulique

(30) Priority: 12.09.2002 GB 0221108
(43) Date of publication of application: 17.03.2004
(73) Proprietor: Goodrich Actuation Systems Ltd, Luton, Bedfordshire LU1 3LU (GB)
(72) Inventor: McKay, Richard John, Brewood Staffordshire ST19 8DX (GB)
(74) Representative: Bailey, Richard Alan

(56) References cited:
- EP-A- 0 534 834
- GB-A- 921 917
- GB-A- 1 285 177
- US-A- 3 002 497
- US-A- 3 024 771
- US-A- 3 472 028
- US-A- 4 297 844

## Description

### Technical Field

This invention relates to a thrust reverser assembly for an aircraft jet engine, particularly a gas turbine engine, and relates also to an hydraulic actuating system for the thrust reverser The invention is concerned with thrust reversers of the kind which are so constructed as to experience an assisting force when being moved from a stowed position to a deployed position, and relate particularly, but not exclusively, to thrust reversers of the so called "Bucket" type.

### Background Art

United States patent 5392991 discloses a thrust reverser of the bucket-type and it can be seen, from US patent 5392991 that as the thrust reverser is deployed from a fully stowed position a point is quickly reached at which the forward edges of the thrust reverser shells or elements project into the air stream passing over the engine, and thus are urged by the air stream to move towards their fully deployed position. However, it can also be seen that as the shells approach their fully deployed position they extend into the jet of exhaust gasses flowing from the exhaust nozzle of the engine and the load imposed by the engine exhaust flow opposes the movement of the shells to their fully deployed position. Generally the force applied by the jet exhaust flow will exceed the force applied by the air flow around the engine as the deployed position is approached. Thus during deployment the shells will need to be driven from their fully stowed position to the point at which the air flow assists, and then at the end of the deploying movement the shells will also need to be driven against the action of the exhaust flow to reach the fully deployed position.

While the invention is described herein in relation to a bucket-type thrust reverser it is to be understood that the invention can be applied to any thrust reverser configuration in which there is an assisting load on the thrust reverser element or elements during deployment of the thrust reverser from its fully stowed position to its fully deployed position.

Thrust reversers typically are deployed by hydraulic piston/cylinder actuators which generally, because of the loads involved, are of relatively high volume and thus require a large capacity high pressure supply. The high pressure supply is derived from one or more hydraulic pumps, and naturally the size of the pump or pumps is determined by the flow requirements of the hydraulic actuator of the thrust reverser. A hydraulic actuator with a single-acting piston is disclosed e.g. in EP 0534834. It is an object of the present invention to provide a thrust reverser assembly, and an hydraulic actuator system, in which the volume of high pressure fluid required by the actuators is reduced and thus the size of the hydraulic supply pump or pumps is minimised.

### Disclosure of Invention

In accordance with the present invention there is provided a thrust reverser assembly comprising at least one thrust reverser element which, during normal use in association with a jet engine, is movable between a stowed position and a deployed position and is so arranged as to experience an assisting load during movement of the element from the stowed position towards the deployed position, a source of hydraulic fluid under pressure, and, a double-acting hydraulic piston and cylinder device for moving said element between said stowed and deployed positions, said hydraulic piston and cylinder device having a first port through which hydraulic fluid under pressure from said source is admitted to one side of said device, said one side of the device being a high pressure side during operation of the device in a thrust reverser element deploy mode, to displace said element from its stowed position, a second port through which hydraulic fluid is displaced from a low pressure side of the device during operation in said deploy mode, a return line through which hydraulic fluid displaced from said low pressure side of said device is returned to said high pressure side of said device in addition to said fluid supply from said pressure source, and, a check valve in said return line preventing flow of hydraulic fluid from said high pressure side to said low pressure side of said device.

Preferably said return line communicates with a low pressure line which receives excess displaced hydraulic fluid not returned from said low pressure side to said high pressure side of said device.

Preferably a flow restrictor controls the rate of discharge of hydraulic fluid from said low pressure side of said device so as to control the speed of movement of said element at least during its assisting load phase of deployment.

Desirably said flow restrictor is positioned in said return line.

Alternatively, where excess hydraulic fluid is displaced from said low pressure side of said device then said flow restrictor controls the rate at which said excess hydraulic fluid flows in said low pressure line.

Advantageously a further flow restrictor is provided to control the flow rate of hydraulic fluid from said high pressure source to the high pressure side of said device.

Preferably said device is operated in a retracting mode to cause deployment of said thrust reverser element.

The invention further resides in an hydraulic system for a thrust reverser assembly as defined above.

### Brief Description of the Drawings

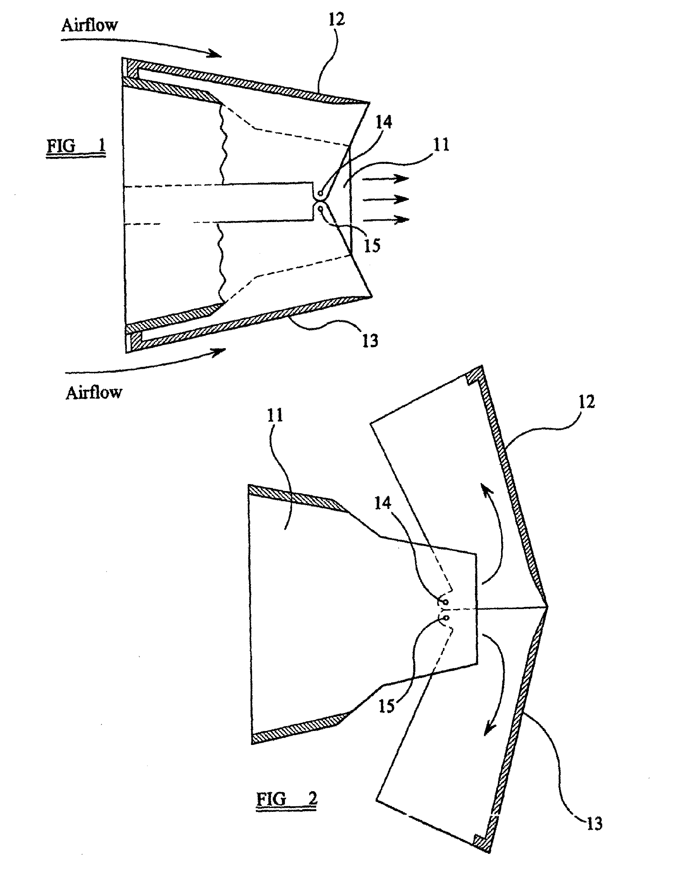

In the accompanying drawings Figures 1 and 2 are diagrammatic views illustrating the exhaust nozzle of a gas turbine engine, or similar jet engine, and showing the thrust reverser elements of the engine respectively in their stowed, and fully deployed positions,

Figure 3 is a diagrammatic representation of part of an hydraulic system of a thrust reverser assembly in accordance with a first example of the present invention,

Figure 4 is a view similar to Figure 3 of a modification of the hydraulic system of the assembly.

Figure 5 is a more detailed hydraulic circuit diagram of the thrust reverser assembly of Figure 4, and illustrating the control valves of the hydraulic system of the assembly in the positions which they occupy during deployment of the thrust reverser elements of the engine, and,

Figure 6 is a view similar to Figure 5 but showing the valves in the position which they occupy during stowing movement of the thrust reverser elements.

### Preferred Mode of Carrying Out the Invention

Referring first to Figures 1 and 2 of the accompanying drawings it can be seen that the exhaust nozzle 11 of the gas turbine engine discharges exhaust gasses rearwardly during the normal operation of the engine as indicated by the arrows in Figure 1. First and second thrust reverser elements 12, 13 are disposed externally of the nozzle 11 on opposite sides of the longitudinal centre line of the engine, the first and second thrust reverser elements 12, 13 (sometimes referred to as thrust reverser shells) are pivotally connected, about parallel axes 14, 15, to the nozzle assembly 11 adjacent the outlet end of the nozzle assembly. Figure 1 illustrates the elements 12, 13 in a stowed, that is to say an inoperative, position lying along the outer surface of the nozzle 11, and allowing exhaust gasses to issue from the nozzle 11 unimpeded. An hydraulic operating system (to be described below) is utilised to drive the elements 12, 13 from the stowed position illustrated in Figure 1 to a deployed position illustrated in Figure 2, and back from the deployed position to the stowed position.

As can be seen in Figure 2, in their deployed positions the elements 12, 13 have been pivoted relative to the nozzle 11 about the axes 14, 15 to a position in which the trailing edges of the elements 12, 13 abut on the longitudinal centre line of the engine. In the deployed position of the elements 12, 13 the elements intercept the flow of exhaust gasses from the nozzle 11 and deflect the flow outwardly and forwardly so that the flow assists braking in bringing the associated aircraft to a halt. It will be understood that thrust reversers are deployed during the landing phase of an aircraft's flight, after the aircraft has touched-down on the runway. Thus immediately before deployment of the thrust reversers there is an air flow over the exterior of the nozzle of the or each engine of the aircraft resulting from the movement of the aircraft along the runway. Immediately deployment of the elements 12, 13 commences the leading edges of the elements 12, 13 will project into the air flow around the exterior of the nozzle assembly 11 and the effect of the airflow hitting the under surfaces of both elements 12, 13 will be to generate an assisting load on the elements 12, 13 driving them towards their fully deployed positions. There is however a forceful flow of gas from the exhaust nozzle and thus as the elements 12, 13 approach their fully deployed position they will start to intersect the high speed gas flow from the exhaust nozzle and there will be a progressively increasing force upon the elements 12, 13 derived from the exhaust gas flow, tending to drive the elements 12, 13 back towards their stowed position. Before full deployment occurs a position is reached at which the air flow and gas flow forces acting on the elements 12, 13 are in balance, and hydraulic force from the hydraulic actuating system of the thrust reverser assembly is needed to drive the elements 12, 13 to their fully deployed positions.

The aforementioned description of thrust reversers and thrust reverser actuation is well known. Reference is made to the generic term jet engine, and principally, but not exclusively, the invention is associated with gas turbine engines. Furthermore, although a bucket-type thrust reverser assembly is illustrated in Figures 1 and 2 it is to be understood that the invention can be applied with other forms of thrust reverser in which the thrust reverser elements experience an assisting load during deployment. It will be understood that deployment of the thrust reverser elements should preferably take place very quickly, so that maximum use of thrust reversal can be made during the braking phase of the landing. However, stowing movement of the thrust reversers can usually take place at a more leisurely pace since this will normally happen after the aircraft has been brought to a slow speed or a complete halt at which point there is little or no air flow to impede the stowing movement, and any continued issuance of exhaust gasses from the nozzle 11 assists the stowing movement.

Figures 3 illustrates part of a hydraulic system in accordance with one example of the invention for use in deploying and stowing thrust reversers of the kind illustrated in Figures 1 and 2. The hydraulic system includes, in association with each thrust reverser element 12, 13, a respective double acting hydraulic piston and cylinder device 16. The free, outer end of the piston rod 17 of the device 16 is coupled to a respective element 12, 13 through any convenient form of linkage arrangement as will be well understood by the skilled addressee of this patent application. In the illustrated embodiment the device 16 is intended to be used in a retracting mode, that is to say a mode in which the piston rod 17 is withdrawn into the cylinder 18, to effect deployment of its respective thrust reverser element. However it will be appreciated that alternative designs of thrust reverser linkage arrangements may use the extending mode of movement of the piston rod 17 to deploy the thrust reverser elements. The piston rod 17 extends through one end wall of the cylinder 18 and a seal 19 seals the sliding interface of the rod 17 and cylinder 18. Within the cylinder 18 the rod 17 is attached to a piston 21, an annular seal 22 carried by the piston 21 sealing the sliding interface of the piston and the cylinder wall. The cylinder of the device 16 is anchored to the structure of the exhaust nozzle 11 of a gas turbine engine in any convenient manner in use.

The wall of the cylinder 18 is provided, adjacent its opposite axial ends respectively, with first and second ports 23, 24. The depiction of the hydraulic connections to the ports 23, 24 in Figure 3 is a depiction of the hydraulic connections which exist during deployment movement of the associated thrust reverser element, the device 16 being retracted to effect deployment. In this mode of operation, an hydraulic return line 25, illustrated in Figure 3 as consisting of three interconnected legs 25a, 25b, 25c, places the port 24 in communication with the port 23 by way of the inlet and outlet of a check valve 27 in the line 25, conveniently positioned within the leg 25c. It can be seen that the check valve 27 prevents flow of hydraulic fluid from the port 23 to the port 24. A high pressure hydraulic fluid pump 28 receives hydraulic fluid from the low pressure source and supplies it, under pressure, to the line 25 between the outlet of the check valve 27 and the port 23. A low pressure line 26 is in communication with the line 25 between the inlet of the check valve 27 and the port 24 and can discharge hydraulic fluid back to a low pressure side of the hydraulic system which will be at a pressure intermediate the high output pressure of the pump 28 and atmospheric pressure. It will be understood that the output line 29 from the pump 28 to the line 25 could in fact be connected directly to the port 23, or to a further port in the wall of the cylinder 18 adjacent the port 23.

The basic operation when deploying the thrust reverser elements is as follows. A deploy signal is given to a control mechanism which operates valves (to be described hereinafter) controlling the flow routing of hydraulic fluid, and energises the pump 28 assuming that the pump 28 is at this time inoperative. Fluid under pressure from the pump 28 is supplied through the line 29 to the left hand side of the piston 21 and drives the piston 21 to the right thus retracting the piston rod 17. Movement of the piston 21 to the right displaces hydraulic fluid from the cylinder 18 to the right hand side of the piston, through the port 24, and into the line 25. During this phase of the movement of the piston 21 the fluid pressure at the port 23 exceeds the fluid pressure at the port 24 and so the check valve 27 remains closed and fluid displaced from the cylinder 18 flows through the legs 25a and 25b of the return line 25 and into the low pressure line 26. Although there is some restriction to flow in the line 26 the pressure in the legs 25a, 25b is insufficient to open the check valve 27.

However, immediately the thrust reverser elements start to deploy the air flow around the exterior of the exhaust nozzle of the engine impinges upon the thrust reverser elements and an assisting load is imposed upon the thrust reverser elements. Thus the piston 21 is driven to the right in Figure 3 by the assisting load acting upon the piston rod 17 and the pressure at the right hand side of the piston 21 increases by comparison with the pressure at the left hand side of the piston 21. A flow restrictor 31 in the line 29 between the pump 28 and the port 23 limits the flow which can pass along the line 29 from the pump, and thus the pressure at the right hand side of the piston slightly exceeds the reduced pressure at the left hand side of the piston and the valve 27 opens to allow flow from the leg 25b through the leg 25c and the port 23 into the cylinder 18 at the left hand side of the piston 21. By virtue of the volume of the piston rod 17 within the left hand end of the cylinder 18, the volume of hydraulic fluid displaced from the right hand side of the piston exceeds the volume required at the left hand side of the piston and the excess hydraulic fluid is discharged into the low pressure line 26.

Pump 28 may still be supplying hydraulic fluid to the left hand side of the piston at this stage, and so the excess hydraulic fluid discharged into the low pressure line 26 will be greater than the volume of the piston rod 17 within the cylinder. The act of returning fluid from the port 24 to the port 23 permits a reduction in the output capacity, and therefore the size, of the pump 28 by comparison with a thrust reverser arrangement in which the pump is required to supply the whole of the fluid needed at the left side of the piston 21.

It will be recognised that the movement of the elements 12, 13 immediately after deployment commences, can be extremely rapid by virtue of the assisting load. In order that the deployment movement of the thrust reverser elements is at a controlled rate, thereby avoiding the risk of damage, a flow restrictor 32 is provided in the line 25, conveniently in the leg 25a. The flow restrictor 32 controls the rate at which hydraulic fluid is displaced from the cylinder 18 through the port 24 and thus controls the rate at which the thrust reverser elements move under the assisting load.

It will be recalled that as the fully deployed position of the thrust reverser elements is approached the effect of the assisting load is negated by the load imposed on the elements as they intersect the exhaust gas flow from the nozzle 11 of the jet engine. Thus before the fully deployed position of the thrust reverser elements is reached the assisting load is insufficient to move the piston 21, and thus the piston 21 and therefore the thrust reverser elements are driven to the fully deployed position by the pressure flow from the pump 28. During this phase of the operation the check valve 27 remains closed and fluid displaced from the right hand side of the piston flows to drain.

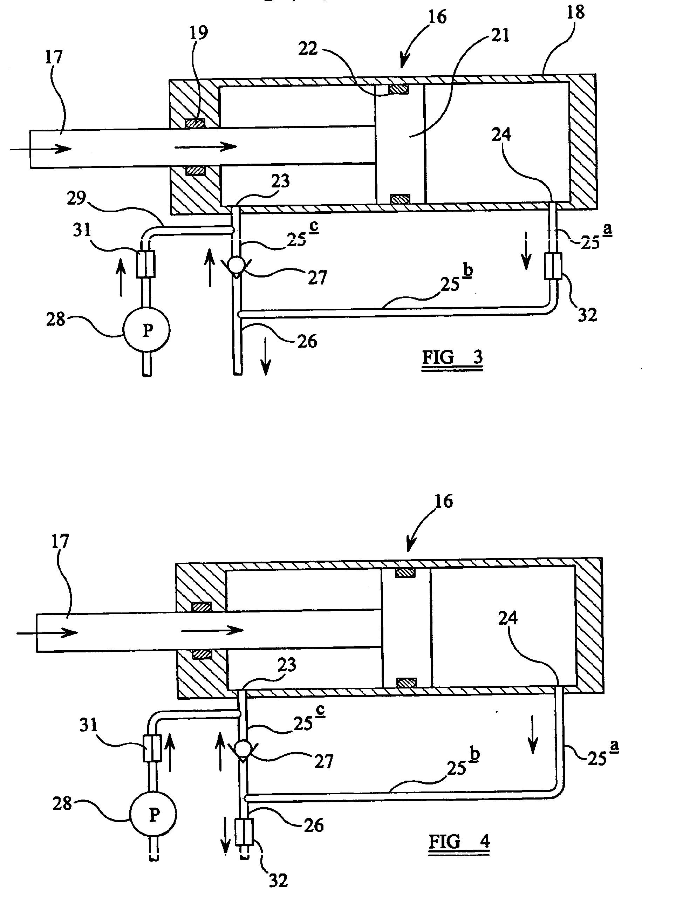

Figure 4 is a view similar to Figure 3 of a modification. In Figure 4 the restrictor 32 is positioned at the junction of the return line 25 and the low pressure line 26 and in essence the restrictor 32 restricts only the excess flow from the port 24 which does not return to the port 23 and not the whole flow from the port 24. It will be recognised that since the volume flowing through the restrictor 32 in Figure 4 is significantly less than the volume flowing through the restrictor 32 in Figure 3, then the restrictor 32 of Figure 4 can be of a much smaller size.

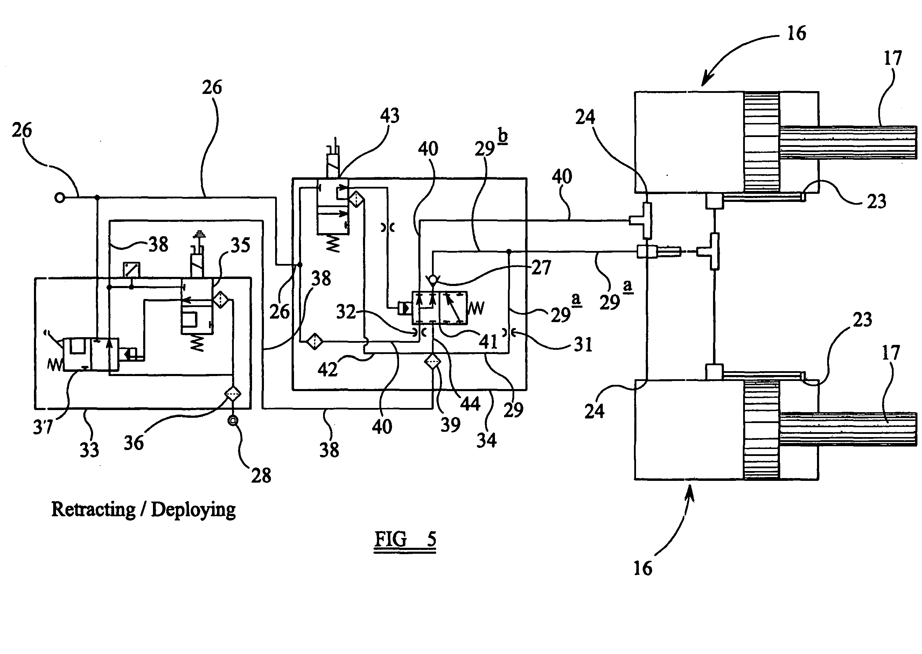

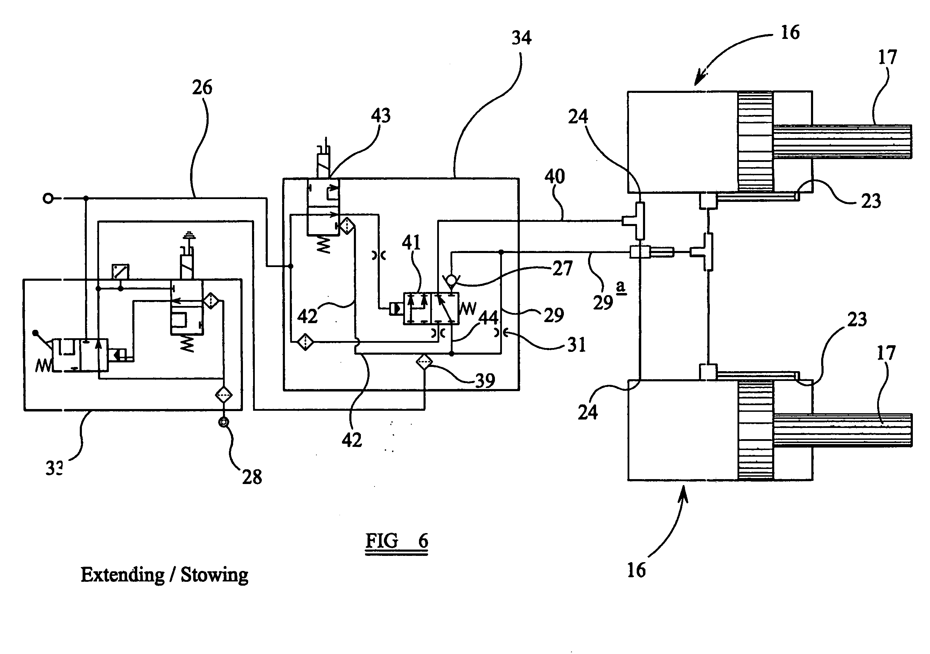

As mentioned above Figure 3, and also Figure 4, are basic diagrammatic views illustrating the hydraulic arrangement during deployment. The hydraulic connections to the ports 23, 24 which are effective during stowing movement are not apparent in Figures 3 and 4. However, Figures 5 and 6 illustrate the hydraulic circuit in a more practical form and show how valving is utilized to control the connections to a pair of piston and cylinder devices in parallel to achieve both stowing and deployment movement.

As is apparent from Figures 5 and 6 first and second piston and cylinder devices 16 are arranged hydraulically in parallel with one another, each device 16 serving to operate a respective thrust reverser element. The hydraulic system of Figures 5 and 6 includes two valve blocks depicted within rectangular border lines, a first, isolation control valve block 33, and a second direction control valve block 34. Within the block 33 a solenoid operated valve 35 controls a flow of hydraulic fluid under pressure from the pump 28 through a filter 36 to the control port of a normally closed change-over valve 37. De-energisation of the solenoid controlling the valve 35 moves the valve 35 to a position in which no pressure is supplied to the control port of the valve 37 and the valve 37 moves, under spring pressure, to connect the hydraulic circuit of valve block 34 and the piston and cylinder devices 16 to a low pressure line 26. However, upon energisation of the solenoid of the valve 35 to stow or deploy the thrust reverser elements the valve 37 is caused to move to a position in which the flow of hydraulic fluid under pressure from the filter 36 is directed through a line 38 connecting the valve blocks 33, 34 and a filter 39 in the block 34 to a line 29 containing the restrictor 31 and communicating through a line 29a downstream of the restrictor 31 with the ports 23 of the devices 16.

The ports 24 of the devices 16 are connected through a line 40 to a change-over valve 41, and, in the position of the change-over valve 41 illustrated in Figure 5 the line 40 is connected through a restrictor 32 to the low pressure line 26. Additionally, the line 29a between the restrictor 31 and the ports 23 is connected through a line 29b to the outlet of a check valve 27, the inlet of which is connected to the change-over valve 41, and in the position shown, is connected within the change-over valve 41 to the line 40.

It will be recognised therefore that pressure from the pump 28 is supplied to the ports 23 to move the pistons of the devices 16 to the left (as shown in Figure 5) that is to say to retract the piston rods 17. The fluid displaced from the devices 16 through the ports 24 flows through the line 40 to the low pressure line 26, and also through the internal connection within the change-over valve 41, the check valve 27, the line 29b, and the line 21a, to the ports 23. Thus the mode of operation is as described with reference to Figure 4.

In Figure 5, it can be seen that the change-over valve 41 is held hydraulically in the position shown against the action of a spring. The hydraulic pressure holding the valve 41 in the position shown is derived from the filter 39 through a line 42 and a solenoid operated direction reversing valve 43. With the solenoid operated valve 43 in the position shown the line 42 is connected to the control port of the valve 41 and so holds the shuttle or spool of the valve 41 in the position shown against spring force.

However, reversal of the position of the valve 43, by operation of the solenoid of the valve 43, to reverse the operation of the devices 16 to stow the thrust reverser moves the valves 43 and 41 to the positions shown in Figure 6 in which the devices 16 are extended so stowing the thrust reverser elements of the engine. Thus in Figure 6 it can be seen that the valve 43 has moved so that the line 42 from the filter 39 is now closed and the actuating port of the valve 41 is connected through the valve 43 to the low pressure line 26. As a result the valve 41 is allowed to move under the action of its return spring to a position in which the line 40 is connected through the valve 41 to a line 44 which receives hydraulic fluid under pressure from the filter 39. Thus the ports 24 are supplied with hydraulic pressure from the pump 28. The inlet side of the check valve 27 is isolated, and thus the check valve 27 has no function in the stowing mode.

Hydraulic fluid under pressure from the filter 39 is still supplied through the restrictor 31, the line 29, and the line 29a to the ports 23. However, the effective surface area of the piston 21 of each device 16 exposed to the pressure at the port 23 is less than that exposed to the pressure at the port 24 and so the pistons will be moved to the right (in Figure 6) displacing fluid through the ports 23, along the line 29a, the line 29, the restrictor 31 and into the line 44 to assist the pump 28 in supplying the necessary volume of hydraulic fluid to the left hand sides of the devices 16. As mentioned above the speed of stowing movement is not of particular significance, and although both sides of the pistons 21 see the same hydraulic pressure in stowing mode, the different effective surface areas of the opposite sides of the pistons 21 will ensure that the devices 16 are extended gradually thereby stowing the thrust reverser elements.

## Claims

1. A thrust reverser assembly comprising at least one thrust reverser element (12, 13) which, during normal use in association with a jet engine, is movable between a stowed position and a deployed position and is so arranged as to experience an assisting load during movement of the element from the stowed position towards the deployed position, a source (28) of hydraulic fluid under pressure, and, a double-acting hydraulic piston and cylinder device (16) for moving said element (12, 13) between said stowed and deployed positions, said hydraulic piston and cylinder device (16) having a first port (23) through which hydraulic fluid under pressure from said source (28) is admitted to one side of said device (16), said one side of the device being a high pressure side during operation of the device in a thrust reverser element deploy mode to displace said element from its stowed position, a second port (24) through which hydraulic fluid is displaced from a low pressure side of the device (16) during operation in said deploy mode, and **characterised by** a return line (25a, 25b, 25c) through which hydraulic fluid displaced from said low pressure side of said device is returned to said high pressure side of said device in addition to said fluid supply from said pressure source (28), and, a check valve (27) in said return line preventing flow of hydraulic fluid from said high pressure side to said low pressure side of said device (16).

2. A thrust reverser assembly as claimed in claim 1 **characterised in that** said return line (25a, 25b, 25c) communicates with a low pressure line (26) which receives excess displaced hydraulic fluid not returned from said low pressure side to said high pressure side of said device (16).

3. A thrust reverser assembly as claimed in claim 1 **characterised by** further including a flow restrictor (32) to control the rate of discharge of hydraulic fluid from said low pressure side of said device (16) so as to control the speed of movement of said element (12, 13) at least during its assisting load phase of deployment.

4. A thrust reverser assembly as claimed in claim 3 **characterised in that** said flow restrictor (32) is positioned in said return line (25a, 25b, 25c).

5. A thrust reverser assembly as claimed in claim 2 **characterised by** further including a flow restrictor (32) to control the rate at which said excess hydraulic fluid flows in said low pressure line (26).

6. A thrust reverser assembly as claimed in claim 1 **characterised by** further including a flow restrictor (31) to control the flow rate of hydraulic fluid from said high pressure source (28) to the high pressure side of said device (16).

7. A thrust reverser assembly as claimed in claim 1 **characterised in that** said device (16) is operated in a retracting mode to cause deployment of said thrust reverser element (12, 13).

8. An hydraulic system for a thrust reverser assembly of the kind comprising at least one thrust reverser element (12, 13) which, during normal use in association with a jet engine, is movable between a stowed position and a deployed position and is so arranged as to experience an assisting load during movement of the element from the stowed position towards the deployed position and, a double-acting hydraulic piston and cylinder device (16) for moving said element between said stowed and deployed positions, said hydraulic piston and cylinder device having a first port (23) through which hydraulic fluid under pressure can be admitted to one side of said device, said one side of the device being a high pressure side during operation of the device in a thrust reverser element deploy mode, and, a second port (24) through which hydraulic fluid can be displaced from a low pressure side of the device during operation in said deploy mode, the hydraulic system comprising, an hydraulic fluid pressure source (28) for connection to said first port, a return line (25) for connection between said first and second ports (23, 24) and through which in use hydraulic fluid displaced from said low pressure side of said device is returned to said high pressure side of said device in addition to fluid supplied in use from said hydraulic fluid pressure source, and, a check valve (27) in said return line in use preventing flow of hydraulic fluid from said high pressure side to said low pressure side of said double-acting hydraulic piston and cylinder device.

9. An hydraulic system as claimed in claim 8 **characterised by** further including a first flow restrictor (31) to control the flow rate of hydraulic fluid from said high pressure source to the high pressure side of said device, and a second flow restrictor (32) to control the rate of discharge of hydraulic fluid from said low pressure side of said device so as to control the speed of movement of said element at least during its assisting load phase of deployment.

## Patentansprüche

1. Schubumkehrbaugruppe, die aufweist: mindestens ein Schubumkehrelement (12, 13), das während der normalen Benutzung in Verbindung mit einem Strahltriebwerk zwischen einer verstauten Position und einer aufgerichteten Position beweglich und so angeordnet ist, dass es während der Bewegung des Elementes aus der verstauten Position in die aufgerichtete Position eine unterstützende Last erfährt; eine Quelle (28) der Hydraulikflüssigkeit unter Druck; und eine doppeltwirkende Hydraulikkolben- und Zylindervorrichtung (16) für das Bewegen des Elementes (12, 13) zwischen der verstauten und der aufgerichteten Position, wobei die Hydraulikkolben- und Zylindervorrichtung (16) aufweist: eine erste Öffnung (23), durch die Hydraulikfluid unter Druck von der Quelle (28) zu einer Seite der Vorrichtung (16) eingelassen wird, wobei eine Seite der Vorrichtung eine Hochdruckseite während der Funktion der Vorrichtung in einem Aufrichtungsmodus des Schubumkehrelementes ist, um das Element aus seiner verstauten Position zu verschieben; eine zweite Öffnung (24), durch die Hydraulikfluid von einer Niederdruckseite der Vorrichtung (16) während der Funktion im Aufrichtungsmodus verdrängt wird, und **gekennzeichnet durch** eine Rückführleitung (25a, 25b, 25c), **durch** die Hydraulikfluid, das von der Niederdruckseite der Vorrichtung verdrängt wird, zur Hochdruckseite der Vorrichtung zurückgeführt wird, zusätzlich zur Fluidzuführung von der Druckquelle (28); und ein Rückschlagventil (27) in der Rückführleitung, um den Strom des Hydraulikfluids von der Hochdruckseite zur Niederdruckseite der Vorrichtung (16) zu verhindern.

2. Schubumkehrbaugruppe nach Anspruch 1, **dadurch gekennzeichnet, dass** die Rückführleitung (25a, 25b, 25c) mit einer Niederdruckleitung (26) in Verbindung steht, die überschüssiges verdrängtes Hydraulikfluid aufnimmt, das nicht von der Niederdruckseite zur Hochdruckseite der Vorrichtung (16) zurückgeführt wird.

3. Schubumkehrbaugruppe nach Anspruch 1, **dadurch gekennzeichnet, dass** es außerdem einen Durchflussbegrenzer (32) umfasst, um die Geschwindigkeit des Ausstömens des Hydraulikfluids aus der Niederdruckseite der Vorrichtung (16) zu steuern, um so die Geschwindigkeit der Bewegung des Elementes (12, 13) zumindestens während seiner Aufrichtungsphase mit unterstützender Last zu steuern.

4. Schubumkehrbaugruppe nach Anspruch 3, **dadurch gekennzeichnet, dass** der Durchflussbegrenzer (32) in der Rückführleitung (25a, 25b, 25c) positioniert ist.

5. Schubumkehrbaugruppe nach Anspruch 2, **dadurch gekennzeichnet, dass** sie außerdem einen Durchflussbegrenzer (32) umfasst, um die Geschwindigkeit zu steuern, mit der überschüssiges Hydraulikfluid in die Niederdruckleitung (26) strömt.

6. Schubumkehrbaugruppe nach Anspruch 1, **dadurch gekennzeichnet, dass** sie außerdem einen Durchflussbegrenzer (31) umfasst, um die Strömungsgeschwindigkeit des Hydraulikfluids von der Hochdruckquelle (28) zur Hochdruckseite der Vorrichtung (16) zu steuern.

7. Schubumkehrbaugruppe nach Anspruch 1, **dadurch gekennzeichnet, dass** die Vorrichtung (16) in einem Rückzugmodus betätigt wird, um die Aufrichtung des Schubumkehrelementes (12, 13) zu veranlassen.

8. Hydrauliksystem für eine Schubumkehrbaugruppe des Typs, der aufweist: mindestens ein Schubumkehrelement (12, 13), das während der normalen Benutzung in Verbindung mit einem Strahltriebwerk zwischen einer verstauten Position und einer aufgerichteten Position beweglich und so angeordnet ist, dass es während der Bewegung des Elementes aus der verstauten Position in die aufgerichtete Position eine unterstützende Last erfährt; und eine doppeltwirkende Hydraulikkolben- und Zylindervorrichtung (16) für das Bewegen des Elementes zwischen der verstauten und der aufgerichteten Position, wobei die Hydraulikkolben- und Zylindervorrichtung aufweist: eine erste Öffnung (23), durch die Hydraulikfluid unter Druck zu einer Seite der Vorrichtung eingelassen werden kann, wobei eine Seite der Vorrichtung eine Hochdruckseite während der Funktion der Vorrichtung in einem Aufrichtungsmodus des Schubumkehrelementes ist; und eine zweite Öffnung (24), durch die Hydraulikfluid von einer Niederdruckseite der Vorrichtung während der Funktion im Aufrichtungsmodus verdrängt werden kann, wobei das Hydrauliksystem aufweist: eine Hydraulikfluiddruckquelle (28) für eine Verbindung mit der ersten Öffnung; eine Rückführleitung (25) für eine Verbindung zwischen der ersten und zweiten Öffnung (23, 24), und durch die bei Benutzung Hydraulikfluid, das von der Niederdruckseite der Vorrichtung verdrängt wird, zur Hochdruckseite der Vorrichtung zurückgeführt wird, zusätzlich zu dem Fluid, das bei Benutzung von der Hydraulikfluiddruckquelle zugeführt wird; und ein Rückschlagventil (27) in der Rückführleitung, das bei Benutzung den Strom des Hydraulikfluids von der Hochdruckseite zur Niederdruckseite der doppeltwirkenden Hydraulikkolben- und Zylindervorrichtung verhindert.

9. Hydrauliksystem nach Anspruch 8, **dadurch gekennzeichnet, dass** es außerdem umfasst: einen ersten Durchflussbegrenzer (31), um die Strömungsgeschwindigkeit des Hydraulikfluids von der Hochdruckquelle zur Hochdruckseite der Vorrichtung zu steuern; und einen zweiten Durchflussbegrenzer (32), um die Geschwindigkeit des Ausströmens des Hydraulikfluids von der Niederdruckseite der Vorrichtung zu steuern, um so die Geschwindigkeit der Bewegung des Elementes mindestens während seiner Aufrichtungsphase mit unterstützender Last zu steuern.

## Revendications

1. Ensemble inverseur de poussée comprenant au moins un élément inverseur de poussée (12, 13) qui, pendant une utilisation normale en association avec un moteur à réaction, peut être déplacé entre une position rentrée et une position déployée et est adapté pour expérimenter une charge de support pendant le déplacement de l'élément de la position rentrée vers la position déployée, une source (28) de fluide hydraulique sous pression et un dispositif à piston et cylindre hydrauliques à double action (16) pour déplacer ledit élément (12, 13) entre lesdites positions rentrée et déployée, ledit dispositif à piston et cylindre hydrauliques (16) étant pourvu d'un premier orifice (23) à travers lequel un fluide hydraulique sous pression provenant de ladite source (28) est admis sur un côté dudit dispositif (16), ledit côté du dispositif étant un côté haute pression pendant le fonctionnement du dispositif dans un mode de déploiement de l'élément inverseur de poussée pour déplacer ledit élément depuis sa position rentrée, d'un second orifice (24) à travers lequel le fluide hydraulique est déplacé depuis un côté basse pression du dispositif (16) pendant le fonctionnement dans ledit mode de déploiement, et **caractérisé par** une conduite de retour (25a, 25b, 25c) à travers laquelle le fluide hydraulique déplacé depuis ledit côté basse pression dudit dispositif est renvoyé vers ledit côté haute pression dudit dispositif en plus de ladite alimentation en fluide venant de la source de pression (28), et une soupape de non-retour (27) dans ladite conduite de retour empêchant un écoulement de fluide hydraulique dudit côté haute pression vers ledit côté basse pression dudit dispositif (16).

2. Ensemble inverseur de poussée selon la revendication 1, **caractérisé par le fait que** ladite conduite de retour (25a, 25b, 25c) communique avec une conduite basse pression (26) qui reçoit de l'excédent de fluide hydraulique déplacé non renvoyé dudit côté basse pression vers ledit côté haute pression dudit dispositif (16).

3. Ensemble inverseur de poussée selon la revendication 1, **caractérisé par le fait qu'**il inclut, en outre, un restricteur d'écoulement (32) pour contrôler le débit de décharge de fluide hydraulique depuis ledit côté basse pression dudit dispositif (16) de manière à commander la vitesse de déplacement dudit élément (12, 13) au moins pendant sa phase de déploiement avec charge de support.

4. Ensemble inverseur de poussée selon la revendication 3, **caractérisé par le fait que** ledit restricteur d'écoulement (32) est positionné dans ladite conduite de retour (25a, 25b, 25c).

5. Ensemble inverseur de poussée selon la revendication 2, **caractérisé par le fait qu'**il inclut, en outre, un restricteur d'écoulement (32) pour contrôler le débit d'écoulement dudit excédent de fluide hydraulique dans ladite conduite basse pression (26).

6. Ensemble inverseur de poussée selon la revendication 1, **caractérisé par le fait qu'**il inclut, en outre, un restricteur d'écoulement (31) pour contrôler le débit d'écoulement de fluide hydraulique de ladite source haute pression (28) vers le côté haute pression dudit dispositif (16).

7. Ensemble inverseur de poussée selon la revendication 1, **caractérisé par le fait que** ledit dispositif (16) fonctionne dans un mode de rétraction pour entraîner le déploiement dudit élément inverseur de poussée (12, 13).

8. Système hydraulique pour un ensemble inverseur de poussée du type comprenant au moins un élément inverseur de poussée (12, 13) qui, pendant une utilisation normale en association avec un moteur à réaction, peut être déplacé entre une position rentrée et une position déployée et est adapté pour expérimenter une charge de support pendant le déplacement de l'élément de la position rentrée vers la position déployée et un dispositif à piston et cylindre hydrauliques à double action (16) pour déplacer ledit élément entre lesdites positions rentrée et déployée, ledit dispositif à piston et cylindre hydrauliques étant pourvu d'un premier orifice (23) à travers lequel un fluide hydraulique sous pression peut être admis sur un côté dudit dispositif, ledit côté du dispositif étant un côté haute pression pendant le fonctionnement du dispositif dans un mode de déploiement de l'élément inverseur de poussée, et d'un second orifice (24) à travers lequel le fluide hydraulique peut être déplacé depuis un côté basse pression du dispositif pendant le fonctionnement dans ledit mode de déploiement, le système hydraulique comprenant une source de pression de fluide hydraulique (28) destinée à être connectée audit premier orifice, une conduite de retour (25) destinée à être connectée entre lesdits premier et second orifices (23, 24) et à travers laquelle, lors de l'utilisation, le fluide hydraulique déplacé depuis ledit côté basse pression dudit dispositif est renvoyé vers ledit côté haute pression dudit dispositif en plus du fluide alimenté, lors de l'utilisation, depuis ladite source de pression de fluide hydraulique, et une soupape de non-retour (27) dans ladite conduite de retour empêchant, lors de l'utilisation, un écoulement de fluide hydraulique dudit côté haute pression vers ledit côté basse pression dudit dispositif à piston et cylindre hydrauliques à double action.

9. Système hydraulique selon la revendication 8, **caractérisé par le fait qu'**il inclut, en outre, un premier restricteur d'écoulement (31) pour contrôler le débit d'écoulement de fluide hydraulique de ladite source haute pression vers le côté haute pression dudit dispositif et un second restricteur d'écoulement (32) pour contrôler le débit de décharge de fluide hydraulique depuis ledit côté basse pression dudit dispositif de manière à commander la vitesse de déplacement dudit élément au moins pendant sa phase de déploiement avec charge de support.
